# FASCICULE DE BREVET EUROPEEN

(11) **EP 2 080 652 B1**
(45) Date de publication et mention de la délivrance du brevet: **19.11.2014**
(21) Numéro de dépôt: 09150684.0
(22) Date de dépôt: 15.01.2009
(51) Int. Cl.: B60J 1/20

(54) **Dispositif d'occultation à barre de tirage équipée de biellettes, et véhicule automobile correspondant**
Abdeckvorrichtung mit Zugstange, die mit Ausgleichselementen ausgestattet ist, und entsprechendes Kraftfahrzeug
Concealing device with tow bar equipped with compensation rods, and corresponding vehicle.

(30) Priorité: 16.01.2008 FR 0850271
(43) Date de publication de la demande: 22.07.2009
(73) Titulaire: Advanced Comfort Systems France SAS - ACS France, 79300 Bressuire (FR)
(72) Inventeur: Guelzec, Stéphane, 44360 Saint Etienne de Montluc (FR); Guilloteau, Sébastien, 79350 Faye L'Abbesse (FR); Thibaudeau, Daniel, 79300 Terves (FR)
(74) Mandataire: Bioret, Ludovic

(56) Documents cités:
- EP-A- 1 209 013
- DE-A1-102004 012 181

## Description

Le domaine de l'invention est celui de l'occultation de surfaces vitrées ou d'ouvertures dans les véhicules automobile. Plus précisément, l'invention concerne un dispositif d'occultation selon le préambule de la revendication 1, présentant une barre de tirage guidée dans deux rails non parallèles.

Un tel dispositif est connu de DE 102004012181 A.

L'invention s'applique notamment aux stores à enrouleur, mettant en oeuvre des toiles, ou écrans, d'occultation mobile, et susceptibles d'être repliées (enroulées) ou déployées en fonction des besoins.

Classiquement, l'une des extrémités de cette toile est solidarisée à un rouleau ou tube enrouleur, monté sur deux paliers pour être mobile en rotation. L'autre extrémité de la toile est généralement munie d'une barre de tirage.

L'un des problèmes de ces dispositifs est que la toile, lorsqu'elle est déployée, et/ou la barre de tirage sont susceptibles de se déplacer de façon intempestive, notamment en se balançant autour de l'axe du tube, et peuvent par exemple venir heurter la vitre ou la garniture du véhicule, notamment lorsque ce dernier se déplace. Ceci est générateur de chocs, de bruit et de détérioration, bien sûr non souhaitable dans un véhicule.

Ce problème se pose en particulier, de façon cruciale, lorsque la toile se déploie de haut en bas, par exemple pour un store pare-soleil équipant une partie supérieure d'un pare-brise. Cette situation pose également problème lorsque la vitre à occulter est inclinée, la toile étant alors éloignée de cette vitre.

Pour pallier ces problèmes, la barre de tirage peut être guidée dans des rails, de façon à assurer le maintien, une mise en place correcte de la toile et une manipulation simplifiée. Le déplacement de la toile et/ou de la barre de tirage peut être motorisé et/ou manuel.

Dans certains cas, du fait des formes de certaines surfaces vitrées du véhicule automobile, les rails de guidage ne peuvent pas être parallèles. C'est notamment le cas des pare-brise, des vitres arrière ou des pavillons vitrés, souvent de forme trapézoïdale ou similaire. Le guidage de la barre de tirage dans de tels rails non parallèles est relativement complexe, du fait de la distance variable entre les rails.

Des solutions ont été proposées pour pallier cette difficulté, notamment sous la forme d'une barre de tirage à longueur variable, comprenant au moins un premier élément télescopique, ou coulissant, par rapport à un second élément.

Cette approche n'est cependant pas utilisable de façon efficace dans toutes les situations, en particulier pour des raisons de solidité et de fiabilité. Ceci peut par exemple être le cas lorsque la toile de store est relativement lourde, et/ou s'étend sur une longue distance (plus d'un mètre par exemple) et/ou est déployée par gravité et/ou est déplacée manuellement.

Plus généralement, il est souhaitable de disposer dans certaines situations d'une alternative à ces systèmes télescopiques.

L'invention a notamment pour objectif de proposer une alternative aux techniques antérieures.

Ainsi, un objectif de l'invention est de fournir une technique simple et efficace de guidage d'un dispositif d'occultation dans des rails non parallèles.

Un autre objectif de l'invention est de fournir une telle technique, qui soit adaptée à une mise en oeuvre motorisée et/ou manuelle.

L'invention a également pour objectif, pour certains modes de réalisation de l'invention, de fournir une telle technique qui soit bien adaptée à des stores relativement lourds et/ou s'étendant sur une grande longueur.

Ces objectifs, ainsi que d'autres qui apparaîtront par la suite, sont atteints à l'aide d'un dispositif d'occultation d'une surface vitrée d'un véhicule automobile, comprenant une barre de tirage entraînant au moins un élément d'occultation entre une position repliée et au moins une position déployée.

Ce dispositif comprend, selon l'invention, deux biellettes de compensation de la variation de l'écartement entre deux rails de guidage, un premier point de liaison de chacune desdites biellettes étant relié à un patin circulant dans l'un desdits rails et un second point de liaison étant relié à ladite barre de tirage, lesdits points de liaison mettant en oeuvre un axe de rotation sensiblement perpendiculaire au plan défini par ledit élément d'occultation, dans une position déployée.

Il est ainsi possible de compenser simplement et efficacement les écarts de distance entre les rails, et de maintenir l'élément d'occultation dans une position inclinée (qu'il soit partiellement ou intégralement déployé), et de neutraliser, ou à tout le moins réduire, le balancement de la barre de tirage et de la toile.

Avantageusement, la distance entre lesdits points de liaison est telle que, ladite biellette forme un angle avec ladite barre de tirage variant dans une plage de variation comprise entre 100 et 170°.

La forme de la biellette pourra être adaptée en fonction des besoins, par exemple pour décaler la position du rail par rapport à la plage de déplacement de la barre de tirage.

Selon un mode de réalisation préférentiel, ledit élément d'occultation est une toile montée sur un tube enrouleur.

D'autres moyens, par exemple un velum, sont bien sûr envisageables. On peut également prévoir plusieurs toiles, montées sur le même tube (lui-même pouvant comprendre plusieurs éléments).

Selon un mode de réalisation particulier, il comprend des moyens de motorisation du déplacement de ladite toile.

Lesdits moyens de motorisation peuvent notamment être logés dans ledit tube enrouleur.

L'invention concerne également les véhicules automobiles comprenant au moins un dispositif d'occultation tel que décrit ci-dessus.

Il peut notamment s'agir de camions, d'autobus, de véhicules utilitaires, ou encore véhicules de tourisme.

Dans un tel véhicule, ladite surface vitrée peut en particulier être le pare-brise dudit véhicule.

Dans ce cas, lesdits rails sont avantageusement logés dans les montants latéraux dudit pare-brise.

D'autres caractéristiques et avantages de invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre schématiquement et partiellement un store selon l'invention, équipant un pare-brise ;
- la figure 2 présente une vue schématique d'une partie, comprenant une biellette selon l'invention, du store de la figure 1 ;
- les figures 3A à 3C présentent le principe du mécanisme de la figure 2, respectivement :

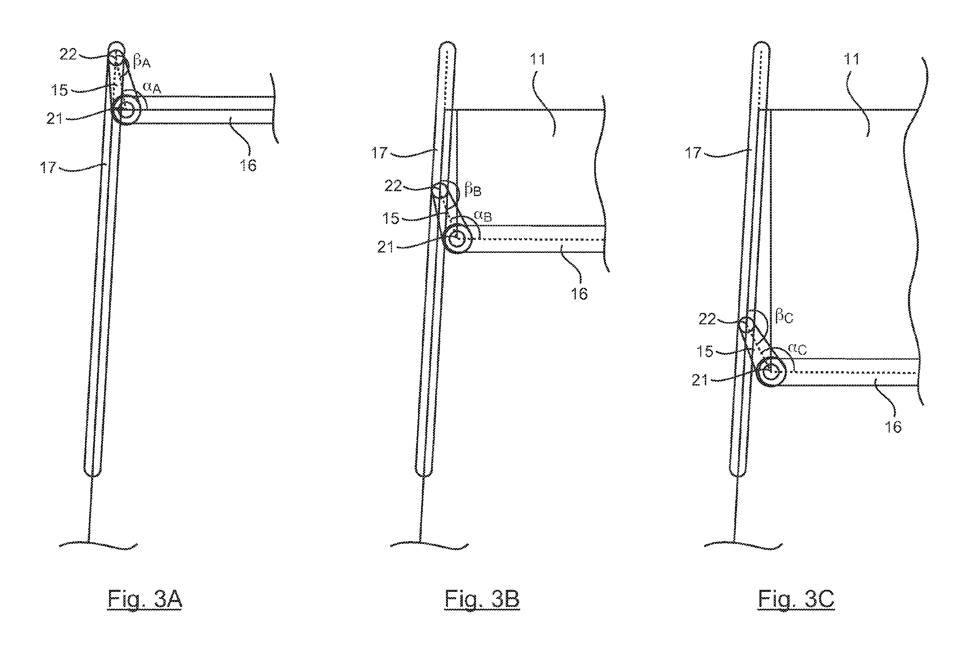

- figure 3A : en position repliée :
- figure 3B : en position partiellement déployée ;
- figure 3C : en position complètement déployée.

Dans le mode de réalisation décrit ci-dessous, à titre d'exemple de réalisation, l'invention est mise en oeuvre sous la forme d'un store à enrouleur destiné à être déployé en regard d'une portion supérieure d'un pare-brise, pour assurer une fonction de pare-soleil.

Il s'agit en l'espèce d'un pare-soleil pour camion, ou autobus, mais l'approche de l'invention peut bien sûr sans difficulté être adaptée à d'autres véhicules, tels que les véhicules utilitaires ou les véhicules de tourisme.

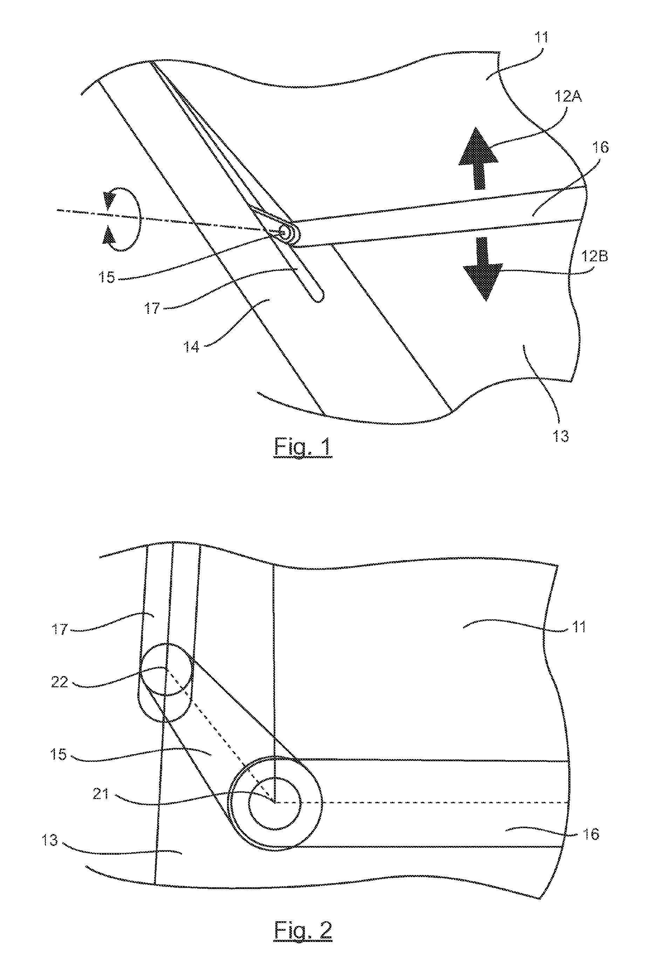

Comme cela apparaît sur la vue partielle de la figure 1, la toile d'occultation 11 peut se déplacer (flèches 12_{A} et 12_{B}) sensiblement parallèlement au pare-brise 13.

Ce pare-brise 13, et donc en conséquence le montant latéral 14 qui le maintient, sont inclinés par rapport à la verticale . Il convient donc que la toile de store 11 le soit également (alors que, dans certains camions ou autobus, il est possible que cette toile soit déployée verticalement sous l'effet de la gravité). C'est l'une des fonctions de la biellette 15.

Comme on le verra plus en détails par la suite, cette biellette 15 présente deux points d'articulation, un premier relié à l'extrémité de la barre de tirage 16 et un second relié à un patin (non visible) circulant dans un rail 17 formé dans le montant latéral 14.

Comme on le voit sur la figure 1, dans laquelle la toile est dans une position complètement déployée, la position du rail peut être légèrement décalée par rapport à celle de la barre de tirage. En d'autres termes, la biellette 15 ne se trouve pas, en position complètement déployée, alignée avec la barre de tirage 16, pour éviter le blocage de la biellette.

Dans le mode de réalisation décrit, appliqué à un camion ou un autobus, on prévoit une toile 11 relativement lourde et épaisse, s'étendant bien sûr sur toute la largeur du pare-brise (c'est-à-dire entre les deux montants, de façon symétrique par rapport à la partie illustrée en figure 1). Les biellettes 15 sont donc choisies et conformée de façon à maintenir efficacement la barre de tirage 16 et donc la toile 11, sans battement trop important.

Une motorisation du déplacement de la toile (flèches 12_{A} et 12_{B}) est avantageusement prévue, pour permettre au conducteur ou à un passager d'actionner le store depuis un bouton de commande déporté.

Ce moteur peut notamment être logé à l'intérieur du tube enrouleur sur lequel est monté la toile 11, et logé dans la garniture du véhicule, au-dessus du pare-brise. Dans ce cas, c'est le tube lui-même qui est motorisé.

Selon d'autres variantes, on peut, via une motorisation, agir sur les patins sur lesquels sont montées les biellettes, par exemple à l'aide d'un système connu en soit à base de câbles de type « push-pull ».

De préférence, ce moteur est débrayable, et automatiquement débrayé lorsqu'il n'est pas actif. Ainsi, il est également possible de déplacer le store manuellement, en agissant directement sur la barre de tirage.

Bien sûr, un déplacement uniquement manuel est également possible.

Dans ce mode de réalisation, du fait du poids et de la dimension de la toile, il n'est généralement pas nécessaire de prévoir de moyens spécifiques pour maintenir la barre de tirage dans une position intermédiaire. Un équilibre naturel se fait, entre la gravité, les frottements éventuels, et la force de rappel du tube. Dans d'autres modes de réalisation, des moyens particuliers de blocage dans des positions intermédiaires peuvent être prévue, par exemple par blocage de la motorisation, ou encore par une action sur les biellettes.

En effet, ces biellettes 15 sont nécessaires pour compenser une absence de parallélisme entre les deux montants latéraux 14, de ce fait, la distance entre ces deux montant varie selon la position de la barre de tirage, et les biellettes 15 permettent de compenser cette variation, en variant l'angle qu'elles forment avec la barre de tirage 16 (et par conséquent avec le rail 17). Il suffit de prévoir un moyen de blocage mécanique de ces angles pour empêcher le déplacement de la barre de tirage, et donc son blocage dans une position intermédiaire.

Le mécanisme à biellette apparaît plus clairement sur la vue schématique de la figure 2.

Cette biellette 15 présente un premier point d'articulation 21 avec l'extrémité de la barre de tirage 17, et un second point d'articulation 22 avec le patin (non visible) circulant dans le rail du montant14.

Les axes de rotation de ces deux points d'articulation 21 et 22 sont perpendiculaires au plan défini par la toile 11.

La biellette 15 est ici de largeur plus importante du côté du point d'articulation 21 que du point d'articulation 22. Il s'agit d'un choix particulier, bien sûr non nécessaire. Plus généralement, on pourra adapter la forme, les dimensions et les matériaux de cette biellette en fonction des besoins et des applications.

Le patin circulant dans le rail peut être un dispositif classique en soi, comprenant des moyens adaptés au guidage dans le rail, et le cas échéant des éléments roulants, et si nécessaire tout autre équipement connu en soi, par exemple pour faciliter le déplacement ou permettre sa motorisation, ou encore son verrouillage.

Les figures de principe 3A, 3B et 3C présentent le dispositif de la figure 2 dans trois positions distinctes :
- figure 3A : position repliée (la toile étant intégralement ou pratiquement intégralement enroulée autour du tube enrouleur) ;
- figure 3B : toile dans une position dépliée intermédiaire ;
- figure 3C : toile intégralement dépliée.

Comme cela apparaît sur ces figures, l'angle α formé entre la biellette et la barre de tirage, ainsi, par voie de conséquence, que l'angle β entre le rail et la biellette, s'ouvre au fur et à mesure du déploiement de la toile pour compenser la variation de distance entre les rails non parallèles.

On a donc :
α_{A}<α_{B}<α_{C}
β_{A}>β_{B}>β_{C}

De préférence, on choisit la dimension de la biellette de façon que les angles dans les positions extrêmes (figures 3A et 3C) ne soient ni plats (180°) ni droits (90°) pour éviter d'éventuels blocages. On pourra par exemple choisir ces angles dans la plage comprise entre 100 et 160 degrés, sans que ceux-ci soient limitatifs.

Dans le mode de réalisation décrit, l'invention concerne une application de type pare-soleil. Les rails s'arrêtent donc en partie supérieure des montants. Il sera bien sûr possible de les prolonger jusqu'au bas du pare-brise, pour permettre une occultation totale, ou presque totale de celui-ci.

Plus généralement de nombreuses autres applications à cette approche sont envisageables. Par exemple elle peut être adaptée à des stores arrière de véhicule, la toile pouvant alors se déployer également de haut en bas, ou encore de bas en haut à partir de la tablette arrière du véhicule.

## Revendications

1. Dispositif d'occultation d'une surface vitrée d'un véhicule automobile, comprenant une barre de tirage (16) entraînant au moins un élément d'occultation (11) entre une position repliée et au moins une position déployée,
**caractérisé en ce qu'**il comprend deux biellettes (15) de compensation de la variation de l'écartement entre deux rails de guidage (17), un premier point de liaison (22) de chacune desdites biellettes (15) étant relié à un patin circulant dans l'un desdits rails (17) et un second point de liaison (21) étant relié à ladite barre de tirage (16),
lesdits points de liaison (21, 22) mettant en oeuvre un axe de rotation sensiblement perpendiculaire au plan défini par ledit élément d'occultation (11), dans une position déployée.

2. Dispositif d'occultation selon la revendication 1, **caractérisé en ce que** la distance entre lesdits points de liaison (21, 22) est telle que ladite biellette (15) forme un angle (α) avec ladite barre de tirage variant dans une plage de variation comprise entre 100 et 170°.

3. Dispositif d'occultation selon l'une quelconque des revendications 1 et 2, **caractérisé en ce que** ledit élément d'occultation est une toile (11) montée sur un tube enrouleur.

4. Dispositif d'occultation selon l'une quelconque des revendications 1 à 3, **caractérisé en ce qu'**il comprend des moyens de motorisation du déplacement dudit élément d'occultation (11).

5. Dispositif d'occultation selon les revendications 3 et 4, **caractérisé en ce que** lesdits moyens de motorisation sont logés dans ledit tube enrouleur.

6. Véhicule automobile comprenant au moins un dispositif d'occultation d'une surface vitrée d'un véhicule automobile, comprenant une barre de tirage (16) entraînant au moins un élément d'occultation (11) entre une position repliée et au moins une position déployée,
**caractérisé en ce qu'**il comprend deux biellettes (15) de compensation de la variation de l'écartement entre deux rails de guidage (17), un premier point de liaison (22) de chacune desdites biellettes (15) étant relié à un patin circulant dans l'un desdits rails (17) et un second point de liaison (21) étant relié à ladite barre de tirage (16),
lesdits points de liaison (21, 22) mettant en oeuvre un axe de rotation sensiblement perpendiculaire au plan défini par ledit élément d'occultation (11), dans une position déployée.

7. Véhicule automobile selon la revendication 6, **caractérisé en ce que** ladite surface vitrée est le pare-brise dudit véhicule.

8. Véhicule automobile selon la revendication 7, **caractérisé en ce que** lesdits rails sont logés dans les montants latéraux dudit pare-brise.

## Patentansprüche

1. Vorrichtung zur Abdeckung einer verglasten Fläche eines Kraftfahrzeugs, welche eine Zugstange (16) umfasst, die mindestens ein Abdeckelement (11) zwischen einer verstauten Position und mindestens einer entfalteten Position bewegt,
**dadurch gekennzeichnet, dass** sie zwei Schwingarme (15) zum Ausgleich der Änderung des Abstands zwischen zwei Führungsschienen (17) umfasst, wobei ein erster Verbindungspunkt (22) jedes der Schwingarme (15) mit einem Gleitschuh verbunden ist, der sich in einer der Schienen (17) hin- und herbewegt, und ein zweiter Verbindungspunkt (21) mit der Zugstange (16) verbunden ist,
wobei die Verbindungspunkte (21, 22) eine Drehachse erzeugen, die im Wesentlichen senkrecht zu der Ebene ist, welche durch das Abdeckelement (11) in einer entfalteten Position definiert ist.

2. Abdeckvorrichtung nach Anspruch 1, **dadurch gekennzeichnet, dass** der Abstand zwischen den Verbindungspunkten (21, 22) so beschaffen ist, dass der Schwingarm (15) einen Winkel (α) mit der Zugstange bildet, welcher in einem Variationsbereich zwischen 100 und 170° liegt.

3. Abdeckvorrichtung nach einem der Ansprüche 1 und 2, **dadurch gekennzeichnet, dass** das Abdeckelement eine Stoffbahn (11) ist, die auf einer Aufrollwalze angebracht ist.

4. Abdeckvorrichtung nach einem der Ansprüche 1 bis 3, **dadurch gekennzeichnet, dass** sie Mittel zum motorischen Antrieb der Verschiebung des Abdeckelements (11) umfasst.

5. Abdeckvorrichtung nach den Ansprüchen 3 und 4, **dadurch gekennzeichnet, dass** die Mittel zum motorischen Antrieb in der Aufrollwalze aufgenommen sind.

6. Kraftfahrzeug, welches mindestens eine Vorrichtung zur Abdeckung einer verglasten Fläche eines Kraftfahrzeugs umfasst, welche eine Zugstange (16) umfasst, die mindestens ein Abdeckelement (11) zwischen einer verstauten Position und mindestens einer entfalteten Position bewegt,
**dadurch gekennzeichnet, dass** sie zwei Schwingarme (15) zum Ausgleich der Änderung des Abstands zwischen zwei Führungsschienen (17) umfasst, wobei ein erster Verbindungspunkt (22) jedes der Schwingarme (15) mit einem Gleitschuh verbunden ist, der sich in einer der Schienen (17) hin- und herbewegt, und ein zweiter Verbindungspunkt (21) mit der Zugstange (16) verbunden ist,
wobei die Verbindungspunkte (21, 22) eine Drehachse erzeugen, die im Wesentlichen senkrecht zu der Ebene ist, welche durch das Abdeckelement (11) in einer entfalteten Position definiert ist.

7. Kraftfahrzeug nach Anspruch 6, **dadurch gekennzeichnet, dass** die verglaste Fläche die Windschutzscheibe des Fahrzeugs ist.

8. Kraftfahrzeug nach Anspruch 7, **dadurch gekennzeichnet, dass** die Schienen in den Seitenstützen der Windschutzscheibe aufgenommen sind.

## Claims

1. Device for concealing a glazed surface of a motor vehicle, said device comprising a pull-bar (16) which draws along at least one concealing element (11) between a coiled-up position and an opened-out position,
**characterised in that** it comprises two links (15) for compensating for the variation in the space between two guide rails (17), a first linking point (22) belonging to each of the said links (15) being connected to a shoe running in one of the said rails (17), and a second linking point (21) being connected to the said pull-bar (16),
the said linking points (21, 22) using an axis of rotation which is substantially perpendicular to the plane defined by the said concealing element (11), in an opened-out position.

2. Concealing device according to Claim 1, **characterised in that** the distance between the said linking points (21, 22) is such that the said link (15) forms an angle (α) with the said pull-bar that varies within a range of variation of between 100 and 170°.

3. Concealing device according to either of Claims 1 and 2, **characterised in that** the said concealing element is a cloth (11) which is mounted on a winding tube.

4. Concealing device according to any of Claim 1 to 3, **characterised in that** it comprises means for motorising the displacement of the said concealing element (11).

5. Concealing device according to Claims 3 and 4, **characterised in that** the said motorising means are housed in the said winding tube.

6. Motor vehicle comprising at least one device for concealing a glazed surface of a motor vehicle, said device comprising a pull-bar (16) which draws along at least one concealing element (11) between a coiled-up position and an opened-out position,
**characterised in that** it comprises two links (15) for compensating for the variation in the space between two guide rails (17), a first linking point (22) belonging to each of the said links (15) being connected to a shoe running in one of the said rails (17), and a second linking point (21) being connected to the said pull-bar (16),
the said linking points (21, 22) using an axis of rotation which is substantially perpendicular to the plane defined by the said concealing element (11), in an opened-out position.

7. Motor vehicle according to Claim 6, **characterised in that** the said glazed surface is the windscreen of the said vehicle.

8. Motor vehicle according to Claim 7, **characterised in that** the said rails are housed in the lateral pillars of the said windscreen.
